(19) Europäisches Patentamt
European Patent Office
Office européen des brevets

(11) **EP 4 759 451 A1**

(12) **EUROPEAN PATENT APPLICATION**

(43) Date of publication:
**17.06.2026 Bulletin 2026/25**

(21) Application number: **25223105.5**

(22) Date of filing: **12.12.2025**

(51) International Patent Classification (IPC):
**B08B 15/02** (2006.01)

(52) Cooperative Patent Classification (CPC):
**B08B 15/023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.12.2024 US 202463733917 P**
**09.12.2025 US 202519413620**

(71) Applicant: **Honeywell International Inc.**
**Charlotte, NC 28202 (US)**

(72) Inventors:
• **AN, Bo**
**Charlotte, 28202 (US)**

• **YAN, Dongyan**
**Charlotte, 28202 (US)**
• **ZHAO, Gilbert**
**Charlotte, 28202 (US)**
• **HUA, Wei**
**Charlotte, 28202 (US)**
• **DI, Xiaokun**
**Charlotte, 28202 (US)**
• **WANG, Zhi Xiong**
**Charlotte, 28202 (US)**

(74) Representative: **Haseltine Lake Kempner LLP**
**Cheapside House**
**138 Cheapside**
**London EC2V 6BJ (GB)**

(54) **SASH SENSING IN A FUME HOOD**

(57) A fume hood (10) includes a housing (12) with a fume hood opening (14) for accessing a working chamber (15) and movable sashes (16) that cover the opening. The fume hood has sash position sensors (18) with a base (20) fixed to the housing and terminals (22) fixed to the sashes. The sensors determine sash positions using time of flight measurements of radio signals between the base and terminals. An exhaust fan (24) exhausts air from the working chamber, controlled by a controller that modulates exhaust air flow based on sash positions. The fume hood can include multiple sashes movable in horizontal and/or vertical directions, with single or multiple bases communicating with multiple terminals. Methods include transmitting radio signals between bases and terminals, determining sash positions from time of flight measurements, and adjusting exhaust air flow accordingly. Ultra-Wide Band radio signals with bandwidth greater than 500 MHz may be used.

FIG. 1

EP 4 759 451 A1

**Description**

RELATED APPLICATIONS

This application claims the benefit of US Provisional Application No. 63/733,917 filed December 13, 2024, which application is incorporated by reference herein.

TECHNICAL FIELD

The present disclosure relates generally to fume hoods, and more particularly to sensing sash position in a fume hood.

BACKGROUND

Fume hoods are used to maintain a stable air circulation in critical environments, such as laboratories and clean rooms. Controlling a stationary face air velocity of fume hoods includes tuning the air flow to compensate for the face velocity variation caused by the movement of sashes. The target air flow is calculated by the target face velocity and the opening area of the sash window. Thus, monitoring and sensing the sash position is significant.

SUMMARY

The present disclosure relates generally to fume hoods, and more particularly to sensing sash position in a fume hood. An example may be found in a fume hood. The fume hood includes a fume hood housing that defines a fume hood opening for accessing a working chamber of the fume hood. The fume hood includes one or more movable sashes that are movably coupled to the fume hood housing. The one or more movable sashes are configured to cover the fume hood opening in a closed position but are movable away from the closed position to provide an opening to access the working chamber of the fume hood. The fume hood includes one or more sash position sensors for sensing a position of each of the one or more movable sashes. Each of the one or more sash position sensors include a base that is operatively fixed relative to the fume hood housing and a terminal that is operatively fixed relative to a corresponding one of the one or more movable sashes. The position of the corresponding one of the one or more movable sashes is based at least in part on a time of flight (TOF) measure of a radio signal traveling between the base and the terminal. The fume hood includes an exhaust fan for exhausting air from the working chamber and a controller that is operatively coupled to the exhaust fan and the one or more sash position sensors. The controller is configured to control the exhaust fan to modulate an amount of exhaust air that is exhausted from the working chamber based at least in part on the position of each of the one or more movable sashes.

Another example may be found in a method for determining a sash position of each of a plurality of movable sashes of a fume hood having a fume hood housing. The method includes transmitting a radio signal from a base that is fixed relative to the fume hood housing. The method includes receiving the radio signal at a plurality of terminals, wherein each of the plurality of terminals is operatively coupled to a corresponding one of the plurality of movable sashes of the fume hood. A position of each of the plurality of movable sashes of the fume hood is determined based at least in part on a time of flight (TOF) measure of the radio signal traveling between the base and the corresponding one of the plurality of terminals.

Another example may be found in a method for determining a sash position of each of a plurality of movable sashes of a fume hood having a fume hood housing. The method includes transmitting a first radio signal from a first base that is fixed relative to the fume hood housing and receiving the first radio signal at a first one of a plurality of terminals. The first one of the plurality of terminals is operatively coupled to a first one of the plurality of movable sashes of the fume hood. A position of the first one of the plurality of movable sashes of the fume hood is determined based at least in part on a time of flight (TOF) measure of the first radio signal traveling between the first base and the first one of the plurality of terminals. The method includes transmitting a second radio signal from a second base that is fixed relative to the fume hood housing and receiving the second radio signal at a second one of the plurality of terminals. The second one of the plurality of terminals is operatively coupled to a second one of the plurality of movable sashes of the fume hood. A position of the second one of the plurality of movable sashes of the fume hood is determined based at least in part on a time of flight (TOF) measure of the second radio signal traveling between the second base and the second one of the plurality of terminals.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

Figure 1 is a schematic diagram showing an illustrative fume hood;
Figure 2 is a flow diagram showing an illustrative method for determining a sash position of each of a plurality of movable sashes;
Figures 3A and 3B are flow diagrams that together show an illustrative method for determining a sash position of each of a plurality of movable sashes.
Figure 4 is a schematic diagram providing an example of time of flight calculations with single sided, two-way ranging;
Figure 5 is a schematic diagram providing an example of time of flight calculations with double sided, two-way ranging;
Figure 6 is a schematic diagram showing an illustrative fume hood;
Figure 7 is a schematic diagram showing an illustrative fume hood;
Figure 8 is a schematic diagram showing an illustrative fume hood; and
Figure 9 is a schematic diagram showing an overall system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

In some instances, a fume hood may include a fume hood housing defining a fume hood opening for accessing a working chamber of the fume hood and one or more movable sashes movably coupled to the fume hood housing. The one or more movable sashes are configured to cover the fume hood opening in a closed position but are movable away from the closed position to provide an opening to access the working chamber of the fume hood. The fume hood includes one or more sash position sensors for sensing a position of each of the one or more movable sashes. Each of the one or more sash position sensors include a base operatively fixed relative to the fume hood housing and a terminal operatively fixed relative to a corresponding one of the one or more movable sashes. The position of the corresponding one of the one or more movable sashes is based at least in part on a time of flight (TOF) measure of a radio signal traveling between the base and the terminal. In some cases, radio signal may be an Ultra-Wide Band (UWB) radio signal that has a bandwidth of greater than 500 MHz The fume hood includes an exhaust fan for exhausting air from the working chamber. A controller is operatively coupled to the exhaust fan and the one or more sash position sensors. The controller is configured to control the exhaust fan to modulate an amount of exhaust air that is exhausted from the working chamber based at least in part on the position of each of the one or more movable sashes.

In some cases, the one or more movable sashes includes two or more movable sashes, and the one or more sash position sensors include a base operatively fixed relative to the fume hood housing, a first terminal operatively fixed relative to a first one of the two or more movable sashes, wherein the position of the first one of the two or more movable sashes is based at least in part on a first time of flight (TOF) measure of a radio signal traveling between the base and the first terminal, and a second terminal operatively fixed relative to a second one of the two or more movable sashes, wherein the position of the second one of the two or more movable sashes is based at least in part on a second time of flight (TOF) measure of a radio signal traveling between the base and the second terminal. In some cases, the one or more movable sashes includes two or more movable sashes, and the one or more sash position sensors include a first base operatively fixed relative to the fume hood housing, a first terminal operatively fixed relative to a first one of the two or more movable sashes, wherein the position of the first one of the two or more movable sashes is based at least in part on a first time of flight (TOF) measure of a radio signal traveling between the first base and the first terminal, a second base operatively fixed relative to the fume hood housing, and a second terminal operatively fixed relative to a second one of the two or more movable sashes, wherein the position of the second one of the two or more movable sashes is based at least in part on a second time of flight (TOF) measure of a radio signal traveling between the second base and the second terminal.

In some cases, the position of the corresponding one of the one or more movable sashes may be based at least in part on a one-way time of flight (TOF) measure of the radio signal traveling between the base and the terminal. In some cases, the position of the corresponding one of the one or more movable sashes may be based at least in part on a two-way time of flight (TOF) measure of the radio signal traveling between the base and the terminal.

In some cases, the fume hood includes a plurality of moveable sashes each movably coupled to the fume hood housing, wherein one or more of the plurality of movable sashes are movable in a horizontal direction. In some cases, the fume hood includes a plurality of moveable sashes each movably coupled to the fume hood housing, wherein one or more of the plurality of movable sashes are movable in a vertical direction. In some cases, the fume hood includes a plurality of moveable sashes each movably coupled to the fume hood housing, wherein one or more of the plurality of movable sashes are movable in a horizontal direction and one or more of the plurality of movable sashes are movable in a vertical direction. In some cases, the fume hood includes a plurality of moveable sashes each movably coupled to the fume hood housing, wherein the one or more sash position sensors include the base and a plurality of terminals, wherein the base is operatively fixed relative to the fume hood housing and each of the plurality of terminals is operatively fixed relative to a corresponding one of the plurality of movable sashes, and wherein the position of each of the plurality of movable sashes is based at least in part on a time of flight (TOF) measure of a radio signal traveling between the base and the corresponding one of the plurality of terminals.

In some instances, a method for determining a sash position of each of a plurality of movable sashes of a fume hood, the fume hood having a fume hood housing includes transmitting a radio signal from a base that is fixed relative to the fume hood housing. The radio signal is received at a plurality of terminals, wherein each of the plurality of terminals is operatively coupled to a corresponding one of the plurality of movable sashes of the fume hood. The method includes determining a position of each of the plurality of movable sashes of the fume hood based at least in part on a time of flight (TOF) measure of the radio signal traveling between the base and the corresponding one of the plurality of terminals. In some cases, the radio signal is an Ultra-Wide Band (UWB) radio signal that has a bandwidth of greater than 500 MHz

In some cases, the method includes adjusting an exhaust air flow from the fume hood based at least in part on the position of each of the plurality of movable sashes of the fume hood. In some cases, the method may include transmitting a radio signal from each of the plurality of terminals to the base and receiving the radio signals from each of the plurality of terminals at the base. The position of each of the plurality of movable sashes of the fume hood may be determined based at least in part on a time of flight (TOF) measure of the radio signal traveling from the base to the corresponding one of the plurality of terminals, and a time of flight (TOF) measure of the radio signal traveling from the corresponding one of the plurality of terminals to the base. In some cases, one or more of the plurality of movable sashes may be movable in a horizontal direction and/or one or more of the plurality of movable sashes may be movable in a vertical direction.

In some instances, a method for determining a sash position of each of a plurality of movable sashes of a fume hood, the fume hood having a fume hood housing includes transmitting a first radio signal from a first base that is fixed relative to the fume hood housing and receiving the first radio signal at a first one of a plurality of terminals, wherein the first one of the plurality of terminals is operatively coupled to a first one of the plurality of movable sashes of the fume hood. The method includes determining a position of the first one of the plurality of movable sashes of the fume hood based at least in part on a time of flight (TOF) measure of the first radio signal traveling between the first base and the first one of the plurality of terminals, transmitting a second radio signal from a second base that is fixed relative to the fume hood housing, and receiving the second radio signal at a second one of the plurality of terminals, wherein the second one of the plurality of terminals is operatively coupled to a second one of the plurality of movable sashes of the fume hood. A position of the second one of the plurality of movable sashes of the fume hood is determined based at least in part on a time of flight (TOF) measure of the second radio signal traveling between the second base and the second one of the plurality of terminals.

In some cases, the method may include adjusting an exhaust air flow from the fume hood based at least in part on the position of each of the plurality of movable sashes of the fume hood. In some cases, the first radio signal and the second radio signal may be Ultra-Wide Band (UWB) radio signals that have a bandwidth of greater than 500 MHz. In some cases, the method may include transmitting a third radio signal from the first one of the plurality of terminals to the first base, receiving the third radio signal from the first one of the plurality of terminals at the first base, and determining the position of the first one of the plurality of movable sashes of the fume hood based at least in part on a time of flight (TOF) measure of the first radio signal traveling from the first base to the first one of the plurality of terminals, and a time of flight (TOF) measure of the third radio signal traveling from the first one of the plurality of terminals to the first base. In some cases, the method may further include transmitting a fourth radio signal from the second one of the plurality of terminals to the second base, receiving the fourth radio signal from the second one of the plurality of terminals at the second base, and determining the position of the second one of the plurality of movable sashes of the fume hood based at least in part on a time of flight (TOF) measure of the second radio signal traveling from the second base to the second one of the plurality of terminals, and a time of flight (TOF) measure of the fourth radio signal traveling from the second one of the plurality of terminals to the second base.

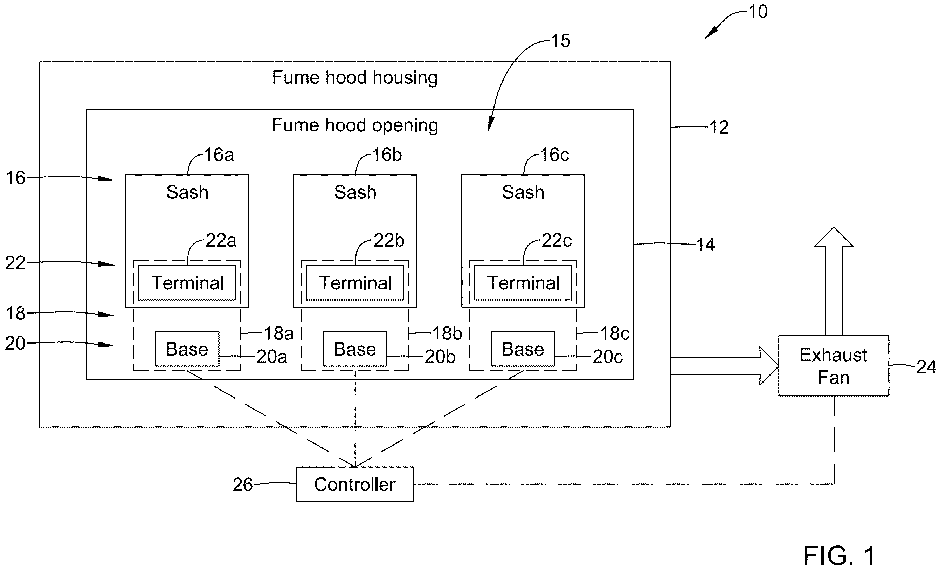

Figure 1 is a schematic diagram showing an illustrative fume hood 10. The illustrative fume hood 10 includes a fume hood housing 12 that defines a fume hood opening 14. The fume hood opening 14 allows access to a working chamber 15 within the fume hood housing 12. The working chamber 15 may be defined by the fume hood housing 12, and may include an entirety of an interior of the fume hood housing 12. In some cases, a work bench or other equipment within the fume hood housing 12 may reduce the overall volume of the working chamber 15. The fume hood 10 includes one or more movable sashes 16 (individually labeled as 16a, 16b, and 16c) are movably coupled to the fume hood housing 12. While a total of three movable sashes 16 are shown, this is merely illustrative, as the fume hood 10 may include any number of movable sashes 16. In some cases, the movable sashes 16 may be slidingly disposed relative to the fume hood housing 12 such that the movable sashes 16 may be slide back and forth relative to the fume hood opening 14 in order to either open up or close down the fume hood opening 14. The movable sashes 16 may be moved from a closed position in which the movable sashes 16 cover the fume hood opening 14 to an open position in which the movable sashes 16 permit access to the working chamber 15 of the fume hood 10. In some cases, the movable sashes 16 may be configured to slide left and right in a horizontal direction, or up and down in a vertical direction, in order to open or close the fume hood opening 14. In some cases, one or more of the movable sashes 16 may move horizontally while one or more of the movable sashes 16 may move vertically.

In some cases, the fume hood 10 includes one or more sash position sensors 18 (individually labeled as 18a, 18b, and 18c) for sensing a position of each of the one or more movable sashes 16. In some cases, each of the position sensors 18 include a base 20 (individually labeled as 20a, 20b, and 20c) that are operatively fixed relative to the fume hood housing 12. As an example, each of the bases 20 may be attached to the fume hood housing 12 near to the fume hood opening 14. In some cases, each of the position sensors 18 include a terminal 22 (individually labeled as 22a, 22b, and 22c) that is operatively fixed relative to a corresponding one of the one or more movable sashes 16. In some cases, the position of the corresponding one of the one or more movable sashes 16 may be based at least in part on a time of flight (TOF) measure of a radio signal traveling between the base 20 and the terminal 22. In some cases, the radio signal may be an Ultra-Wide Band (UWB) radio signal that has a bandwidth of greater than 500 MHz. In some cases, a single base 20 may communicate with one or more terminals 22. As an example, with the three movable sashes 16 that are shown in Figure 1, it is possible for a single base 20 (say the base 20a) to communicate with each of the terminal 22a, the terminal 22b, and the terminal 22c in order to ascertain a position of each of the movable sash 16a, the movable sash 16b, and the movable sash 16c.

The fume hood 10 includes an exhaust fan 24 for exhausting air from the working chamber 15. The fume hood 10 includes a controller 26 that is operatively coupled to the exhaust fan 24 and the one or more sash position sensors 18. The controller 26 may be configured to control the exhaust fan 24 to modulate an amount of exhaust air that is exhausted from the working chamber 15 based at least in part on the position of each of the one or more movable sashes 16.

In some instances, the one or more sash position sensors 18 may include a base 20 that is operatively fixed relative to the fume hood housing 12, a first terminal 22 that is operatively fixed relative to a first one of two or more movable sashes 16, and a second terminal 22 that is operatively fixed relative to a second one of two or more movable sashes 16. The position of the first one of the two or more movable sashes 16 may be based at least in part on a first time of flight (TOF) measure of a radio signal traveling between the base 20 and the first terminal 22. The position of the second one of the two or more movable sashes 16 may be based at least in part on a second time of flight (TOF) measure of a radio signal traveling between the base 20 and the second terminal 22.

In some instances, the one or more sash position sensors 18 may include a first base 20 that is operatively fixed relative to the fume hood housing 12, and a first terminal 22 that is operatively fixed relative to a first one of two or more movable sashes 16. The position of the first one of two or more movable sashes 16 may be based at least in part on a first time of flight (TOF) measure of a radio signal traveling between the first base 20 and the first terminal 22. The one or more sash position sensors 18 may include a second base 20 that is operatively fixed relative to the fume hood housing 12 and a second terminal 22 that is operatively fixed relative to a second one of two or more movable sashes 16. The position of the second one of two or more movable sashes 16 may be based at least in part on a second time of flight (TOF) measure of a radio signal traveling between the second base 20 and the second terminal 22.

In some cases, the one or more sash position sensors 18 may include a single base 20 and a plurality of terminals 22. The single base 20 may be operatively fixed to the fume hood housing 12 and each of the plurality of terminals 22 may be operatively fixed to a corresponding one of the plurality of movable sashes 16. The position of each of the plurality of movable sashes 16 may be based at least in part on a time of flight (TOF) measure of a radio signal traveling between the base 20 and the corresponding one of the plurality of terminals 22.

In some cases, the position of the corresponding one of the one or more movable sashes 16 may be based at least in part on a one-way time of flight (TOF) measure of the radio signal traveling between the base 20 and the terminal 22. In some cases, the position of the corresponding one of the one or more movable sashes 16 may be based at least in part on a two-way time of flight (TOF) measure of the radio signal traveling between the base 20 and the terminal 22.

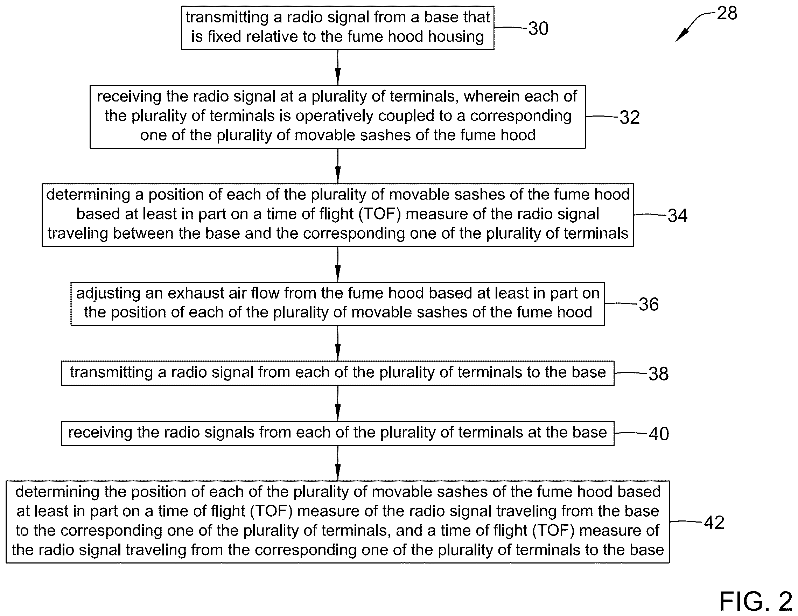

Figure 2 is a flow diagram showing an illustrative method 28 for determining a sash position of each of a plurality of movable sashes (such as the movable sashes 16) of a fume hood (such as the fume hood 10) that includes a fume hood housing (such as the fume hood opening 14). In some cases, one or more of the plurality of movable sashes may be movable in a horizontal direction and/or one or more of the plurality of movable sashes may be movable in a vertical direction. The method 28 includes transmitting a radio signal from a base (such as the base 20) that is fixed relative to the fume hood housing, as indicated at block 30. The radio signal is received at a plurality of terminals (such as the terminals 22), wherein each of the plurality of terminals is operatively coupled to a corresponding one of the plurality of movable sashes of the fume hood, as indicated at block 32. In some cases, the radio signal may be an Ultra-Wide Band (UWB) radio signal that has a bandwidth of greater than 500 MHz. A position of each of the plurality of movable sashes of the fume hood is determined based at least in part on a time of flight (TOF) measure of the radio signal traveling between the base and the corresponding one of the plurality of terminals, as indicated at block 34.

In some cases, the method 28 may include adjusting an exhaust air flow from the fume hood based at least in part on the position of each of the plurality of movable sashes of the fume hood, as indicated at block 36. In some cases, the method 28 may include transmitting a radio signal from each of the plurality of terminals to the base, as indicated at block 38. The radio signals from each of the plurality of terminals may be received at the base, as indicated at block 40. The position of each of the plurality of movable sashes of the fume hood may be determined based at least in part on a time of flight (TOF) measure of the radio signal traveling from the base to the corresponding one of the plurality of terminals, and a time of flight (TOF) measure of the radio signal traveling from the corresponding one of the plurality of terminals to the base, as indicated at block 42.

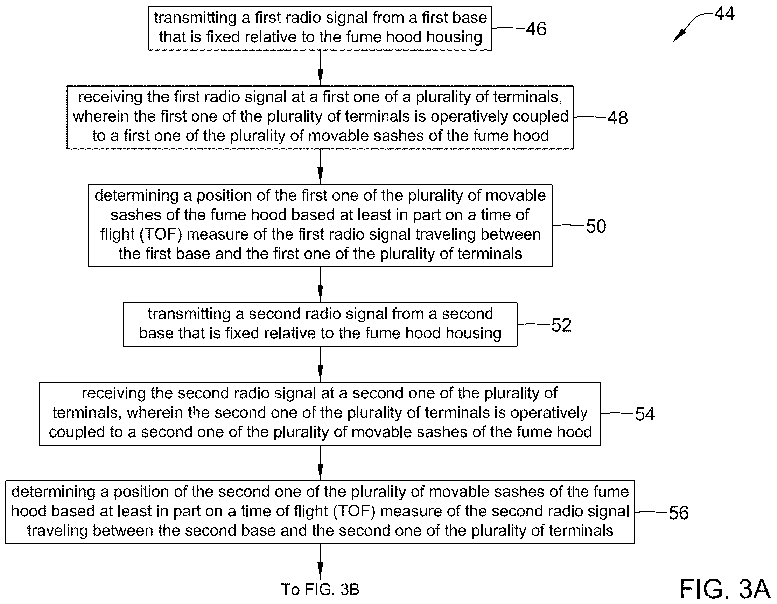

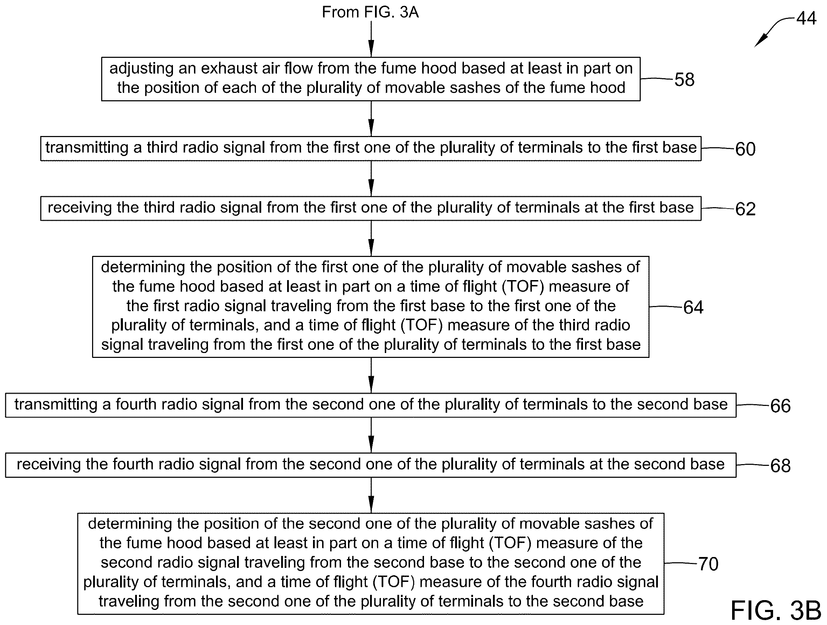

Figures 3A and 3B are flow diagrams that together show an illustrative method 44 for determining a sash position of each of a plurality of movable sashes (such as the movable sashes 16) of a fume hood (such as the fume hood 10) that includes a fume hood housing (such as the fume hood housing 12). The method 44 includes transmitting a first radio signal from a first base (such as the base 20) that is fixed relative to the fume hood housing, as indicated at block 46. The first radio signal is received at a first one of a plurality of terminals (such as the terminals 22), wherein the first one of the plurality of terminals is operatively coupled to a first one of the plurality of movable sashes of the fume hood, as indicated at block 48. A position of the first one of the plurality of movable sashes of the fume hood may be determined based at least in part on a time of flight (TOF) measure of the first radio signal traveling between the first base and the first one of the plurality of terminals, as indicated at block 50. A second radio signal is transmitted from a second base that is fixed relative to the fume hood housing, as indicated at block 52. The second radio signal is received at a second one of the plurality of terminals, wherein the second one of the plurality of terminals is operatively coupled to a second one of the plurality of movable sashes of the fume hood, as indicated at block 54. A position of the second one of the plurality of movable sashes of the fume hood is determined based at least in part on a time of flight (TOF) measure of the second radio signal traveling between the second base and the second one of the plurality of terminals, as indicated at block 56. In some cases, the first radio signal and the second radio signal may be Ultra-Wide Band (UWB) radio signals that have a bandwidth of greater than 500 MHz.

Continuing on Figure 3B, the method 44 may include adjusting an exhaust air flow from the fume hood based at least in part on the position of each of the plurality of movable sashes of the fume hood, as indicated at block 58. In some cases, the method 44 may include transmitting a third radio signal from the first one of the plurality of terminals to the first base, as indicated at block 60. The third radio signal from the first one of the plurality of terminals is received at the first base, as indicated at block 62. The position of the first one of the plurality of movable sashes of the fume hood is determined based at least in part on a time of flight (TOF) measure of the first radio signal traveling from the first base to the first one of the plurality of terminals, and a time of flight (TOF) measure of the third radio signal traveling from the first one of the plurality of terminals to the first base, as indicated at block 64.

In some cases, the method 44 may include transmitting a fourth radio signal from the second one of the plurality of terminals to the second base, as indicated at block 66. The fourth radio signal from the second one of the plurality of terminals is received at the second base, as indicated at block 68. The position of the second one of the plurality of movable sashes of the fume hood is determined based at least in part on a time of flight (TOF) measure of the second radio signal traveling from the second base to the second one of the plurality of terminals, and a time of flight (TOF) measure of the fourth radio signal traveling from the second one of the plurality of terminals to the second base, as indicated at block 70.

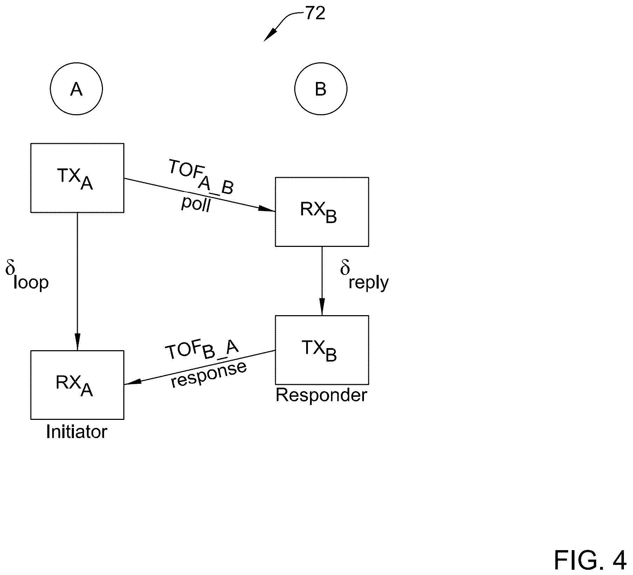

UWB technology utilizes the Time of Flight to calculate distance. The most straightforward approach is single sided with two way ranging, as shown in Figure 4. Figure 4 provides a graphic 72 that demonstrates singled sided with two way ranging. The initiator (e.g. base) sends a radio wave to the responder (e.g. terminal), and the responder will then send a response radio wave after an internal delay $\delta_r$. The initiator determines a loop time $\delta_l$ from when the initiator sends the radio wave to the responder to when the initiator receives the reply response radio wave from the responder. The distance D between the initiator and the responder is represented by:

$$D = \frac{\delta_l - \delta_r}{2} \times c.$$

where c is the speed of light.

The Time of Flight (ToF) is represented by:

$$ToF_{A\_B} = \frac{\delta_{loop} - \delta_{reply}}{2}$$

where $\delta_{loop}$ and $\delta_{reply}$ are as defined in Figure 4.

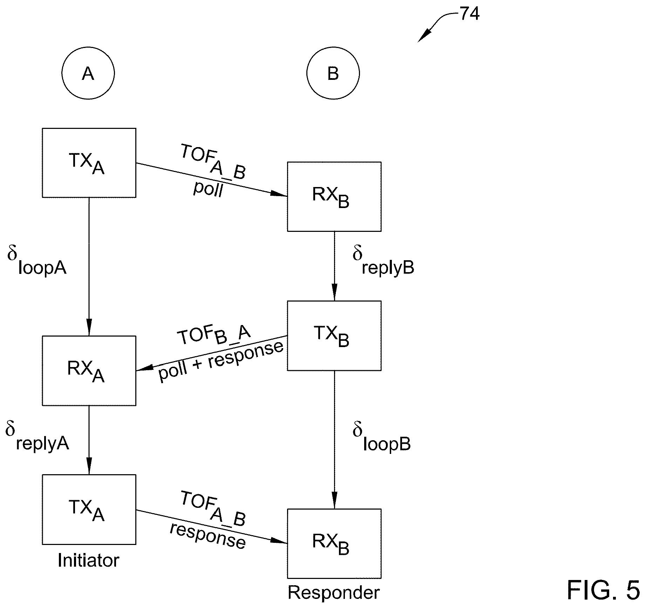

The clock difference between the UWB devices (e.g. between the initiator and the responder) may reduce the accuracy of the ranging, thus double sided with two-way ranging may be used, as shown in Figure 5. Figure 5 shows a graphic 74 that demonstrates double sided with two-way ranging. The distance D will be represented by:

$$D = \frac{\delta_{LA} \times \delta_{LB} - \delta_{RA} \times \delta_{RB}}{\delta_{LA} + \delta_{LB} + \delta_{RA} + \delta_{RB}} \times c$$

The time of flight (ToF) is represented by:

$$ToF_{A\_B} = \frac{\delta_{loopA} \; x \; \delta_{loopB} - \delta_{replyA} \; x \; \delta_{replyB}}{\delta_{loopA} + \delta_{loopB} + \delta_{replyA} + \delta_{replyB}}$$

where $\delta_{loopA}$, $\delta_{loopB}$, $\delta_{replyA}$, and $\delta_{reply}$ are as defined in Figure 5.

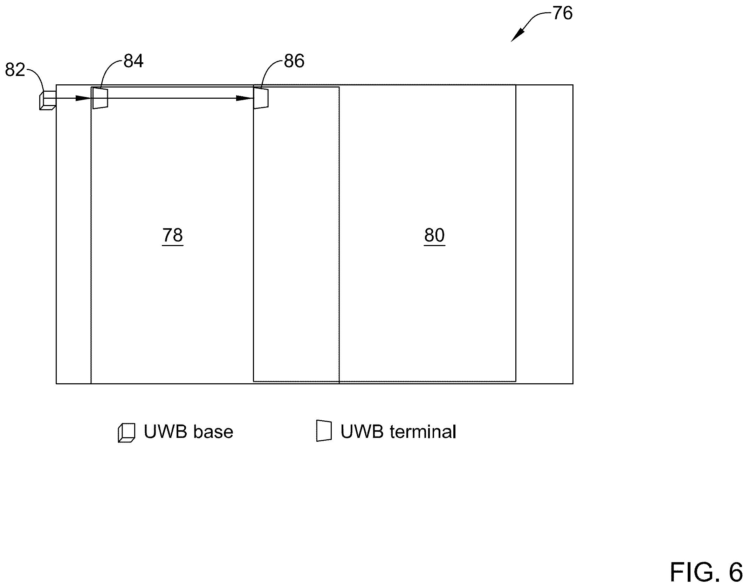

Figure 6 is a schematic diagram showing an illustrative fume hood 76 having a first sash 78 and a second sash 80. A UWB base 82 is secured to a corner of the fume hood 76. The UWB base 82 communicates with a first UWB terminal 84 in order to ascertain the relative position of the first sash 78. The UWB base 82 communicates with a second UWB terminal 86 to ascertain the relative position of the second sash 80.

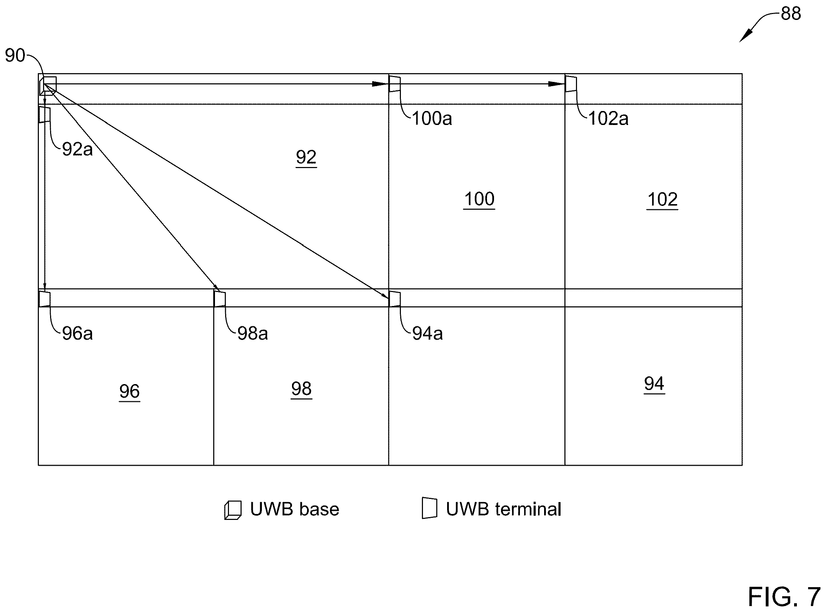

Figure 7 is a schematic showing an illustrative fume hood 88 having a UWB base 90 secured to a corner of the fume hood 88. The fume hood 88 includes a first vertical sash 92 with a UWB terminal 92a secured to the first vertical sash 92, a second vertical sash 94 with a UWB terminal 94a secured to the second vertical sash 94, a first horizontal sash 96 with a UWB terminal 96a secured to the first horizontal sash 96, a second horizontal sash 98 with a UWB terminal 98a secured to the second horizontal sash 98, a third horizontal sash 100 with a UWB terminal 100a secured to the third horizontal sash 100, and a fourth horizontal sash 102 with a UWB terminal 102a secured to the fourth horizontal sash 102. The UWB base 90 communicates with each of the UWB terminals 92a, 94a, 96a, 98a, 100a, and 102a to calculate the respective position of each of the sashes 92, 94, 96, 98, 100, and 102. Calculations for the first vertical sash 92, the third horizontal sash 100 and the fourth horizontal sash 102 are straightforward. Calculations for the second vertical sash 94, the first horizontal sash 96, and the second horizontal sash 98 may require additional data processing. As an example, for the second vertical sash 94, the distance between lower sash bottom to the lower edge of the fume hood 88 will be calculated as:

$$Opening \; Distance = \sqrt{1 - \left(\frac{l}{d}\right)^2} \times d + h,$$

where $l$ is the distance between left sash edge to left hood window edge, d is the measurement result of UWB, and h is the height of the sash. Other distances can be calculated similarly. In some cases, the ranging data may be uploaded to a controller (DHV) periodically, where a digital model of the sashes can be established and the opening area can be calculated in real-time or near real-time.

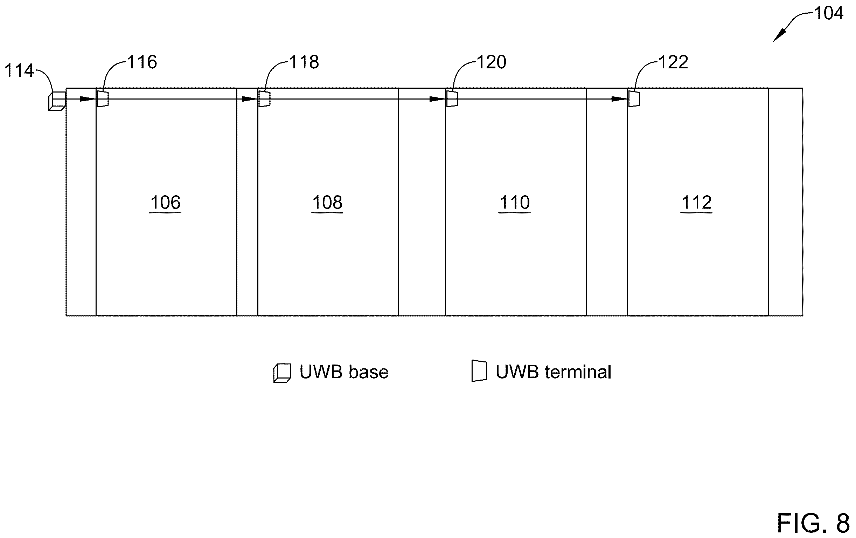

Figure 8 is a schematic showing an illustrative fume hood 104 that includes a total of four sashes 106, 108, 110, and 112 that are horizontally aligned. A UWB base 114 is secured to a corner of the fume hood 104. A UWB terminal 116 is secured to a corner of the sash 106, a UWB terminal 118 is secured to a corner of the sash 108, a UWB terminal 120 is secured to a corner of the sash 110, and a UWB terminal 122 is secured to a corner of the sash 112. In cases in which the UWB base 114 is horizontally or vertically aligned with each of the UWB terminals 116, 118, 120, and 122, the distance acquired is the distance between the sash edge to the fume hood window edge. In this example, assuming the width of the fume hood window is W, the width of each of sash is $S_1$, $S_2$, $S_3$, and $S_4$ respectively, the measurement result of the UWB

terminals are $d_1$, $d_2$, $d_3$, and $d_4$ respectively, and the height of the sash is H, then the opening area A will be

$$A = (d_1 + (w - (d_2 + s_2))) \times H$$

If

$$d_2 > s_1 + d_1$$

$$A = (d_1 + (d_2 - (s_1 + d_1)) + (w - (d_2 + s_2))) \times H.$$

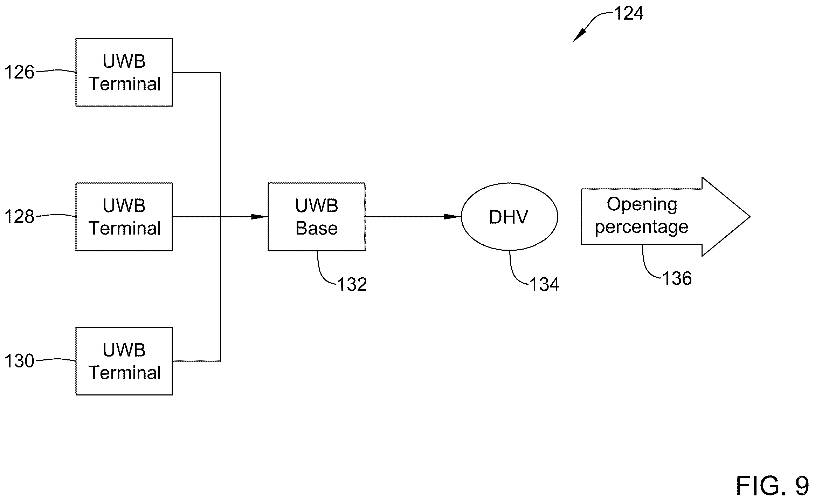

Figure 9 is a schematic diagram showing an illustrative system 124 in which several UWB terminals 126, 128, and 130 each communicate with a UWB base 132. In some cases, the ranging data may be periodically uploaded to a DHV (a controller) 134, where a digital model of the sashes may be established. This can allow calculating an opening percentage 136 defined by the sashes in real-time or in near real-time.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A fume hood comprising:

   a fume hood housing defining a fume hood opening for accessing a working chamber of the fume hood;
   one or more movable sashes movably coupled to the fume hood housing, wherein the one or more movable sashes are configured to cover the fume hood opening in a closed position but are movable away from the closed position to provide an opening to access the working chamber of the fume hood;
   one or more sash position sensors for sensing a position of each of the one or more movable sashes, wherein the one or more sash position sensors include:

      a base operatively fixed relative to the fume hood housing;
      a terminal operatively fixed relative to a corresponding one of the one or more movable sashes, wherein the position of the corresponding one of the one or more movable sashes is based at least in part on a time of flight (TOF) measure of a radio signal traveling between the base and the terminal;

   an exhaust fan for exhausting air from the working chamber; and
   a controller operatively coupled to the exhaust fan and the one or more sash position sensors, wherein the controller is configured to control the exhaust fan to modulate an amount of exhaust air that is exhausted from the working chamber based at least in part on the position of each of the one or more movable sashes.

2. The fume hood of claim 1, wherein the one or more movable sashes includes two or more movable sashes, and wherein the one or more sash position sensors include:

   a base operatively fixed relative to the fume hood housing;
   a first terminal operatively fixed relative to a first one of the two or more movable sashes, wherein the position of the first one of the two or more movable sashes is based at least in part on a first time of flight (TOF) measure of a radio signal traveling between the base and the first terminal; and
   a second terminal operatively fixed relative to a second one of the two or more movable sashes, wherein the position of the second one of the two or more movable sashes is based at least in part on a second time of flight (TOF) measure of a radio signal traveling between the base and the second terminal.

3. The fume hood of any one of claims 1 or 2, wherein the one or more movable sashes includes two or more movable sashes, and wherein the one or more sash position sensors include:

a first base operatively fixed relative to the fume hood housing;

a first terminal operatively fixed relative to a first one of the two or more movable sashes, wherein the position of the first one of the two or more movable sashes is based at least in part on a first time of flight (TOF) measure of a radio signal traveling between the first base and the first terminal;

a second base operatively fixed relative to the fume hood housing; and

a second terminal operatively fixed relative to a second one of the two or more movable sashes, wherein the position of the second one of the two or more movable sashes is based at least in part on a second time of flight (TOF) measure of a radio signal traveling between the second base and the second terminal.

4. The fume hood of any one of claims 1 to 3, wherein the radio signal is an Ultra-Wide Band (UWB) radio signal that has a bandwidth of greater than 500 MHz.

5. The fume hood of any one of claims 1 to 4, comprising a plurality of moveable sashes each movably coupled to the fume hood housing, wherein one or more of the plurality of movable sashes are movable in a horizontal direction and/or one or more of the plurality of movable sashes are movable in a vertical direction.

6. A method for determining a sash position of each of a plurality of movable sashes of a fume hood, the fume hood having a fume hood housing, the method comprising:

transmitting a radio signal from a base that is fixed relative to the fume hood housing;

receiving the radio signal at a plurality of terminals, wherein each of the plurality of terminals is operatively coupled to a corresponding one of the plurality of movable sashes of the fume hood; and

determining a position of each of the plurality of movable sashes of the fume hood based at least in part on a time of flight (TOF) measure of the radio signal traveling between the base and the corresponding one of the plurality of terminals.

7. The method of claim 6, comprising adjusting an exhaust air flow from the fume hood based at least in part on the position of each of the plurality of movable sashes of the fume hood.

8. The method of any one of claims 5 to 7, wherein the radio signal is an Ultra-Wide Band (UWB) radio signal that has a bandwidth of greater than 500 MHz.

9. The method of any one of claims 5 to 8, comprising:

transmitting a radio signal from each of the plurality of terminals to the base;

receiving the radio signals from each of the plurality of terminals at the base; and

determining the position of each of the plurality of movable sashes of the fume hood based at least in part on a time of flight (TOF) measure of the radio signal traveling from the base to the corresponding one of the plurality of terminals, and a time of flight (TOF) measure of the radio signal traveling from the corresponding one of the plurality of terminals to the base.

10. The method of any one of claims 5 to 9, wherein one or more of the plurality of movable sashes are movable in a horizontal direction and/or one or more of the plurality of movable sashes are movable in a vertical direction.

11. A method for determining a sash position of each of a plurality of movable sashes of a fume hood, the fume hood having a fume hood housing, the method comprising:

transmitting a first radio signal from a first base that is fixed relative to the fume hood housing;

receiving the first radio signal at a first one of a plurality of terminals, wherein the first one of the plurality of terminals is operatively coupled to a first one of the plurality of movable sashes of the fume hood;

determining a position of the first one of the plurality of movable sashes of the fume hood based at least in part on a time of flight (TOF) measure of the first radio signal traveling between the first base and the first one of the plurality of terminals;

transmitting a second radio signal from a second base that is fixed relative to the fume hood housing;

receiving the second radio signal at a second one of the plurality of terminals, wherein the second one of the plurality of terminals is operatively coupled to a second one of the plurality of movable sashes of the fume hood; and

determining a position of the second one of the plurality of movable sashes of the fume hood based at least in part on a time of flight (TOF) measure of the second radio signal traveling between the second base and the second one of the plurality of terminals.

12. The method of claim 11, comprising adjusting an exhaust air flow from the fume hood based at least in part on the position of each of the plurality of movable sashes of the fume hood.

13. The method of any one of claims 11 or 12, wherein the first radio signal and the second radio signal are Ultra-Wide Band (UWB) radio signals that have a bandwidth of greater than 500 MHz.

14. The method of any one of claims 11 to 13, comprising:

transmitting a third radio signal from the first one of the plurality of terminals to the first base;
receiving the third radio signal from the first one of the plurality of terminals at the first base; and
determining the position of the first one of the plurality of movable sashes of the fume hood based at least in part on a time of flight (TOF) measure of the first radio signal traveling from the first base to the first one of the plurality of terminals, and a time of flight (TOF) measure of the third radio signal traveling from the first one of the plurality of terminals to the first base.

15. The method of claim 14, comprising:

transmitting a fourth radio signal from the second one of the plurality of terminals to the second base;
receiving the fourth radio signal from the second one of the plurality of terminals at the second base; and
determining the position of the second one of the plurality of movable sashes of the fume hood based at least in part on a time of flight (TOF) measure of the second radio signal traveling from the second base to the second one of the plurality of terminals, and a time of flight (TOF) measure of the fourth radio signal traveling from the second one of the plurality of terminals to the second base.

FIG. 1

EP 4 759 451 A1

EP 4 759 451 A1

transmitting a radio signal from a base that is fixed relative to the fume hood housing —30

receiving the radio signal at a plurality of terminals, wherein each of the plurality of terminals is operatively coupled to a corresponding one of the plurality of movable sashes of the fume hood —32

determining a position of each of the plurality of movable sashes of the fume hood based at least in part on a time of flight (TOF) measure of the radio signal traveling between the base and the corresponding one of the plurality of terminals —34

adjusting an exhaust air flow from the fume hood based at least in part on the position of each of the plurality of movable sashes of the fume hood —36

transmitting a radio signal from each of the plurality of terminals to the base —38

receiving the radio signals from each of the plurality of terminals at the base —40

determining the position of each of the plurality of movable sashes of the fume hood based at least in part on a time of flight (TOF) measure of the radio signal traveling from the base to the corresponding one of the plurality of terminals, and a time of flight (TOF) measure of the radio signal traveling from the corresponding one of the plurality of terminals to the base —42

28

FIG. 2

```
┌─────────────────────────────────────────────┐
│ transmitting a first radio signal from a first base │──46          ╱─44
│   that is fixed relative to the fume hood housing   │              ╱
└─────────────────────────────────────────────┘

┌──────────────────────────────────────────────────────────┐
│ receiving the first radio signal at a first one of a plurality of terminals, │
│ wherein the first one of the plurality of terminals is operatively coupled │──48
│   to a first one of the plurality of movable sashes of the fume hood   │
└──────────────────────────────────────────────────────────┘

┌──────────────────────────────────────────────────────────┐
│ determining a position of the first one of the plurality of movable │
│   sashes of the fume hood based at least in part on a time of   │
│ flight (TOF) measure of the first radio signal traveling between │──50
│   the first base and the first one of the plurality of terminals   │
└──────────────────────────────────────────────────────────┘

┌─────────────────────────────────────────────┐
│   transmitting a second radio signal from a second   │──52
│   base that is fixed relative to the fume hood housing   │
└─────────────────────────────────────────────┘

┌──────────────────────────────────────────────────────────┐
│   receiving the second radio signal at a second one of the plurality of   │
│ terminals, wherein the second one of the plurality of terminals is operatively │──54
│ coupled to a second one of the plurality of movable sashes of the fume hood │
└──────────────────────────────────────────────────────────┘

┌──────────────────────────────────────────────────────────────────┐
│ determining a position of the second one of the plurality of movable sashes of the fume │
│ hood based at least in part on a time of flight (TOF) measure of the second radio signal │──56
│   traveling between the second base and the second one of the plurality of terminals   │
└──────────────────────────────────────────────────────────────────┘
```

To FIG. 3B                                    FIG. 3A

From FIG. 3A

—44

adjusting an exhaust air flow from the fume hood based at least in part on the position of each of the plurality of movable sashes of the fume hood —58

transmitting a third radio signal from the first one of the plurality of terminals to the first base —60

receiving the third radio signal from the first one of the plurality of terminals at the first base —62

determining the position of the first one of the plurality of movable sashes of the fume hood based at least in part on a time of flight (TOF) measure of the first radio signal traveling from the first base to the first one of the plurality of terminals, and a time of flight (TOF) measure of the third radio signal traveling from the first one of the plurality of terminals to the first base —64

transmitting a fourth radio signal from the second one of the plurality of terminals to the second base —66

receiving the fourth radio signal from the second one of the plurality of terminals at the second base —68

determining the position of the second one of the plurality of movable sashes of the fume hood based at least in part on a time of flight (TOF) measure of the second radio signal traveling from the second base to the second one of the plurality of terminals, and a time of flight (TOF) measure of the fourth radio signal traveling from the second one of the plurality of terminals to the second base —70

FIG. 3B

EP 4 759 451 A1

FIG. 4

FIG. 5

EP 4 759 451 A1

UWB base     UWB terminal

FIG. 6

EP 4 759 451 A1

FIG. 7

UWB base    UWB terminal

FIG. 8

EP 4 759 451 A1

EP 4 759 451 A1

FIG. 9

Europäisches
Patentamt
European
Patent Office
Office européen
des brevets

# EUROPEAN SEARCH REPORT

**Application Number**

EP 25 22 3105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/061630 A1 (CHARLES DONALD E [US]) 2 March 2017 (2017-03-02) * paragraph [0016] - paragraph [0022]; figures 1-7 * | 1-15 | INV. B08B15/02 |
| A | US 2014/094106 A1 (MCILHANY KEITH [US]) 3 April 2014 (2014-04-03) * figures 1-6 * | 1-15 | |
| A | CN 114 453 375 A (LABORATORY FUSED WITH LTD RESPONSIBILITY COMPANY) 10 May 2022 (2022-05-10) * paragraph [0029] - paragraph [0030]; figures 1, 2 * | 1-15 | |
| A | US 5 470 275 A (JACOB STEVEN D [US] ET AL) 28 November 1995 (1995-11-28) * figures 1-6 * | 1-15 | |
| A | US 11 801 538 B2 (MEASURED AIR PERFORMANCE LLC [US]) 31 October 2023 (2023-10-31) * column 45, line 48 - column 47, line 36; figures 13-28 * | 1-15 | TECHNICAL FIELDS SEARCHED (IPC) B08B |
| A | US 2024/329670 A1 (HUA WEI [US] ET AL) 3 October 2024 (2024-10-03) * claims 1-20; figures 1-10 * | 1-15 | |

The present search report has been drawn up for all claims

| Place of search | Date of completion of the search | Examiner |
|---|---|---|
| The Hague | 9 April 2026 | Cassiat, Clément |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 3105

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | | Publication date | Patent family member(s) | | Publication date |
|---|---|---|---|---|---|
| US 2017061630 | A1 | 02-03-2017 | BR | 112015005979 A2 | 04-07-2017 |
| | | | CA | 2885368 A1 | 27-03-2014 |
| | | | EP | 2898475 A1 | 29-07-2015 |
| | | | MX | 357567 B | 13-07-2018 |
| | | | US | 2014080396 A1 | 20-03-2014 |
| | | | US | 2017061630 A1 | 02-03-2017 |
| | | | WO | 2014047100 A1 | 27-03-2014 |
| US 2014094106 | A1 | 03-04-2014 | BR | 112015006862 A2 | 04-07-2017 |
| | | | CA | 2886222 A1 | 03-04-2014 |
| | | | EP | 2901418 A1 | 05-08-2015 |
| | | | MX | 344462 B | 14-12-2016 |
| | | | US | 2014094106 A1 | 03-04-2014 |
| | | | WO | 2014052104 A1 | 03-04-2014 |
| CN 114453375 | A | 10-05-2022 | CN | 114453375 A | 10-05-2022 |
| | | | DE | 102020129412 A1 | 12-05-2022 |
| US 5470275 | A | 28-11-1995 | AT | E157028 T1 | 15-09-1997 |
| | | | AU | 666609 B2 | 15-02-1996 |
| | | | CA | 2120193 A1 | 06-10-1994 |
| | | | DE | 69405041 T2 | 11-12-1997 |
| | | | EP | 0623398 A1 | 09-11-1994 |
| | | | JP | 2544583 B2 | 16-10-1996 |
| | | | JP | H0755212 A | 03-03-1995 |
| | | | KR | 100340747 B1 | 18-11-2002 |
| | | | US | 5470275 A | 28-11-1995 |
| US 11801538 | B2 | 31-10-2023 | US | 2021291242 A1 | 23-09-2021 |
| | | | US | 2024009715 A1 | 11-01-2024 |
| US 2024329670 | A1 | 03-10-2024 | CN | 118719758 A | 01-10-2024 |
| | | | EP | 4443065 A1 | 09-10-2024 |
| | | | US | 2024329670 A1 | 03-10-2024 |

EPO FORM P0459

For more details about this annex : see Official Journal of the European Patent Office, No. 12/82

**EP 4 759 451 A1**

**Patent documents cited in the description**

- US 63733917